# EUROPÄISCHE PATENTSCHRIFT

(11) **EP 1 304 064 B1**
(45) Veröffentlichungstag und Bekanntmachung des Hinweises auf die Patenterteilung: **10.05.2006**
(21) Anmeldenummer: 02015413.4
(22) Anmeldetag: 11.07.2002
(51) Int. Cl.: A47J 43/07

(54) **Küchenmaschine zum Zubereiten von Lebensmitteln**
Kitchen machine for preparation of food
Robot ménager pour la préparation d'aliments

(30) Priorität: 17.10.2001 DE 10151231
(43) Veröffentlichungstag der Anmeldung: 23.04.2003
(73) Patentinhaber: MAWEVA- HOLDING AG (Ltd.), 9517 Mettlen (CH)
(72) Erfinder: Rüttimann, Max, CH-8570 Weinfelden (CH)
(74) Vertreter: Rüger, Barthelt & Abel Patentanwälte

(56) Entgegenhaltungen:
- DE-A- 3 641 902
- US-A- 6 089 746

## Beschreibung

Die Erfindung betrifft eine Küchenmaschine zum Zubereiten von Lebensmitteln, mit einem zur Aufnahme der Lebensmittel bestimmten Gefäß, einem in dem Gefäß umlaufenden angetriebenen Werkzeug und einer das Werkzeug in Umdrehung versetzenden Antriebsquelle, die mit dem Werkzeug kuppelbar ist, wobei das Werkzeug mittels einer in dem Gefäß angeordneten Achse oder Welle geführt bzw. gelagert ist.

In der Praxis sind Küchenmaschinen gebräuchlich bei denen im Boden des Gefäßes eine koaxiale Welle drehbar gelagert ist, auf der ein in dem Gefäß umlaufendes Werkzeug angeordnet ist und die von einer außerhalb, insbesondere unterhalb des Gefäßes angeordneten Antriebsquelle, bspw. in Gestalt eines Antriebsmotors, angetrieben wird. Die von dem Boden aus in das Innere des Gefäßes reichende Welle, die häufig mit einer an dem Boden angeformten Schutzhülse umgeben ist, behindert die Entnahme der zubereiteten Lebensmittel aus dem Gefäß und steht auch der Reinigung des Gefäßes hinderlich im Wegen. Grundsätzlich Gleiches gilt für eine andere Bauart solcher Küchenmaschinen bei der im Boden des Gefäßes eine starre Achse verankert ist, die in das Innere des Gefäßes ragt und zur Lagerung oder Führung eines Werkzeuges dient, das von einer Antriebsquelle angetrieben wird, die mit einer Antriebswelle von oben her in das Gefäß ragt und mit dem auf der Achse gelagerten Werkzeug kuppelbar ist. Die Behinderung der Entnahme der Lebensmittel und der Reinigung des Gefäßes wird um so größer je kleiner der Durchmesser des meist zylindrischen topf- oder urnenförmigen Gefäßes ist. Mit kleiner werdenden Durchmesser des Gefäßes wird nämlich die radiale Weite des zwischen der zentrischen Achse oder Welle und der Gefäßinnenwand vorhandenen Ringraums entsprechend kleiner, mit der Folge, dass es für den Benutzer schwer oder gar unmöglich wird mit der ganzen Hand in diesen Ringraum hereinzugreifen. Der Benutzer muss Spachteln oder Abstreifer zu Hilfe nehmen, um die zubereiteten Lebensmittel aus dem Gefäß zu entnehmen, was umständlich ist. Außerdem hat die Praxis gezeigt, dass der Benutzer zu diesem Zweck nicht selten aus Bequemlichkeit ungeeignete Werkzeuge, wie Metalllöffel, Messer und dergleichen zur Lebensmittelentnahme benutzt, was nicht selten zu einer Beschädigung des in der Regel aus Kunststoff bestehenden Gefäßes führt.

Ein typisches Beispiel für ein Küchengerät der erwähnten Art ist die der DE 36 41 902 C2 beschriebene Vorrichtung zum Zerkleinern von Nahrungsmitteln. Bei dieser Vorrichtung ist ein Nahrungsmittel aufnehmendes Gefäß in Gestalt einer napfförmigen Innenschale mit einer es umgebenden, Standfüße tragenden Außenschale abgedichtet verschraubt und durch einen mittels Bajonetteverschluss lösbar befestigten Deckel verschlossen. Im Boden der Innenschale ist über ein entsprechendes Lager ein Zerkleinerungswerkzeug drehbar gelagert, das mit einem sich zentrisch durch die Innenschale erstreckenden Wellenstummel verbunden ist, der zur Kupplung mit der Antriebswelle eines auf eine entsprechende Öffnung im Deckel aufgesetzten Stabrührgerätes eingerichtet ist. Griffmulden an der Außenschale erlauben es das Gerät bei der Arbeit mit einer Hand zu halten. Die zerkleinerten Nahrungsmittel können aus der Innenschale im Wesentlichen nur ausgekippt werden, wobei die Entfernung an der Innenwandung fest haftender Teile schwierig und die Reinigung der Innenschale schon wegen des fest mit ihr verbundenen Werkzeugs nicht einfach ist.

Bei anderen Küchengeräten, die als Zusatzgerät zu Stabrührgeräten im Gebrauch sind, ist es bekannt das Werkzeug auf einer in den Boden des Gefäßes starr eingesetzten konzentrischen Achse zu lagern oder zu führen und es auf der dieser Achse gegenüberliegenden Seite mit der Antriebswelle des auf den Deckel des Gefäßes aufgesetzten Stabrührgeräts zu koppeln. Bei dieser Bauart kann zwar das Werkzeug aus dem Gefäß entnommen werden, doch ist die Entnahme der bearbeiteten Lebensmittel aus dem Gefäß nicht einfach genug.

Schließlich ist aus der US-A 6, 089,746 eine Küchenmaschine bekannt, bei der auf den Rand des Gefäßes eine Motoreinheit aufgesetzt ist, deren in das Gefäß ragende Antriebswelle eine aufgepresste Nabe trägt, an welcher das als Schlagmesser ausgebildete Werkzeug sitzt und die eine konzentrische Lagerbohrung aufweist, in welcher ein topf- oder schalenförmiges Lagermittel mittels eines Lagerzapfens frei drehbar und unverlierbar gelagert ist. Das mit der konkaven Seite zu dem Gefäßboden weisende Lagermittel wirkt in einer Ausführungsform mit einem am Gefäßboden angeformten, im Wesentlichen zylindrischen Ansatz und in einer anderen Ausführungsform mit der Gefäßinnenwand in der Nähe des Bodens zusammen, um die Antriebswelle im Bereiche des Gefäßbodens zu lagern. Durch die radiale Abstützung des Wellenendes sollen beim Betrieb mit honen Drehzahlen ggfs. auftretende Vibrationen Vermieden werden. Die Reinigung des Gefäßes ist bei dieser Küchenmaschine einfach; die Entnahme der zubereiteten Lebensmittel aus dem Gefäß kann aber nur in herkömmlicher Weise mittels eines Schopfwerkzeüges oder durch Umkippen des Gefäßes etc, geschehen. Das topf- oder scheibenförmige Lagermittel ist zur Aufnahme von zubereiteten Lebensmitteln weder bestimmt noch geeignet.

Aufgabe der Erfindung ist es deshalb hier abzuhelfen und eine Küchenmaschine der eingangs genannten Art zu schaffen, bei der die Entnahme der zubereiteten Lebensmittel aus dem Gefäß und die Reinigung des Gefäßes im Vergleich zu den bekannten Maschinen oder Geräten vergleichbarer Bauart erleichtert sind.

Zur Lösung dieser Aufgabe weist die Küchenmaschine gemäß der Erfindung die Merkmale des Patentanspruchs 1 auf.

Der in das Gefäß herausnehmbarer eingesetzte tellerförmige Einsatz, der randseitig im Wesentlichen an die Innenwand des Gefäßes heranreicht und mit seiner an der Innenfläche angeformten Nabe oder Hülse die Achse oder Welle für das Werkzeug eng umschließt, kann nach Abschluss des Zubereitungsvorgangs und Öffnen des Gefäßes einfach aus dem Gefäß herausgezogen werden, wobei er die zubereiteten Lebensmittel aus dem Gefäß heraushebt, so dass keinerlei Spachteln, Löffel oder dergleichen Werkzeuge auch dann nicht erforderlich sind, wenn bei kleineren Typen und damit entsprechend kleinem Durchmesser des Gefäßes beengte Platzverhältnisse vorliegen.

Abhängig von der speziellen Bauart der Küchenmaschine kann die Achse mit dem tellerförmigen Einsatz starr verbunden sein, wobei das Werkzeug auf der Achse drehbar gelagert ist und zweckmäßigerweise eine Kupplungseinrichtung für die Antriebsquelle aufweist. Diese Antriebsquelle kann bspw. ein Stabrührgerät sein, das auf das Gefäß aufsetzbar ist. Die Anordnung ist dabei mit Vorteil derart getroffen, dass das Stabrührgerät auf einem das Gefäß zumindest teilweise abschließenden Deckel aufsetzbar ist, wobei der Deckel ein eingangsseitig von dem Stabrührgerät angetriebenes Getriebe enthält, das ausgangsseitig mit dem Werkzeug kuppelbar ist und sicherstellt, dass das Werkzeug mit der für den jeweiligen Zubereitungsvorgang zweckmäßigen Drehzahl umläuft.

Bei einer anderen Bauart der Küchenmaschine kann die das Werkzeug tragende Welle an dem tellerförmigen Einsatz drehbar gelagert sein, so dass sie beim Herausnehmen des Einsatzes aus dem Gefäß zusammen mit dem Einsatz und ihren Lagermitteln aus dem Gefäß entnommen wird.

Der tellerförmige Einsatz, der für sich Gegenstand der Patentansprüche 15 bis 21 ist, kann einen aufgebogenen Rand aufweisen, um die zubereiteten Lebensmittel bei der Entnahme aus dem Gefäß zusammen zu halten. Er kann im Übrigen gegen die Innenwand des Gefäßes abgedichtet sein, wozu der Rand mit einer Dichtlippe versehen oder als solche ausgebildet sein kann. Im Übrigen ist es zweckmäßig, wenn der tellerförmige Einsatz im Wesentlichen eben ist, wenngleich auch napfförmige Ausführungsformen denkbar sind.

Um zu vermeiden, dass der tellerförmige Einsatz bei der Zubereitung der Lebensmittel mit dem Werkzeug mit umläuft, ist es von Vorteil, wenn die Anordnung derart getroffen ist, dass das Gefäß und/oder der tellerförmige Einsatz Mittel zur Verdrehsicherung des Einsatzes in dem Gefäß aufweist. Dazu ist allerdings zu vermerken, dass es auch Bauformen von Küchenmaschinen gibt, bei denen es zweckmäßig sein kann, dass der tellerförmige Einsatz mit dem Werkzeug umlaufend ausgebildet ist.

Der zusammen mit seiner Achse oder Welle aus dem Gefäß entnommene Einsatz kann ebenso wie das Gefäß selbst leicht gereinigt werden. Er ist im Übrigen bei der Entnahme der zubereiteten Lebensmittel leicht zu handhaben und bietet für den Benutzer bei der Vorbereitung der Maschine für einen neuen Arbeitsgang keine Erschwernis, weil er ohne Mühe in das Gefäß einsetzbar ist.

Erwähnt wurde schon, dass es auch Küchenmaschinen gibt, bei denen die Antriebswelle des Werkzeugs den Boden des Gefäßes durchdringend angeordnet ist, wobei die Antriebsquelle in der Regel unterhalb des Gefäßes angeordnet ist. Der für solche Maschinen verwendete tellerförmig Einsatz trägt mit Vorteil eine hohle Achse, durch die die Antriebswelle verläuft und die verhindert, dass bei der Entnahme des mit zubereiteten Lebensmittel beladenen Einsatzes aus dem Gefäß Lebensmittel durch die Durchgangsöffnung für die Antriebswelle herausfallen.

Unter einer Küchenmaschine zur Zubereitung von Lebensmitteln sind im Rahmen der Erfindung alle Vorrichtungen, Geräte und Maschinen für diesen Zweck verstanden und zwar unabhängig von der Größe und der Antriebsleistung. Dabei ist es ohne Bedeutung, ob es sich um eine eigenständige Maschine oder lediglich um ein Zusatzgerät zu einem anderen Küchengerät, bspw. zu einem Hand- oder Stabrührgerät, handelt. Insbesondere von Bedeutung ist die Erfindung aber für Geräte, die sich durch einen verhältnismäßig kleinen Durchmesser ihres Gefäßes und damit beengte Platzverhältnisse für die Entnahme der zubereiteten Lebensmittel auszeichnen.

Unter "Zubereiten" von Lebensmitteln sind alle dafür gebräuchlichen Behandlungsarten, wie Rühren, Mahlen, Zerkleinern, Raspeln, Schneiden, Pürieren und dergleichen verstanden.

In der Zeichnung sind Ausführungsbeispiele des Gegenstandes der Erfindung dargestellt, es zeigen:
- Fig. 1: eine Küchenmaschine gemäß der Erfindung in einer Seitenansicht, Fig. 2 in die Küchenmaschine nach Fig. 1, geschnitten längs der Linie II,
- Fig. 2: in einer Seitensicht,
- Fig. 3: den tellerförmigen Einsatz der Küchenmaschine nach Fig. 2 in einer perspektivischen Darstellung,
- Fig. 4: Werkzeug in Gestalt einer Raffelscheibe der Küchenmaschine nach Fig. 2 in perspektivischer schematischer Darstellung,
- Fig. 5: einen Raffeleinsatz für die Raffelscheibe nach Fig. 4 in perspektivischer Darstellung,
- Fig. 6: den tellerförmigen Einsatz für eine Küchenmaschine gemäß der Erfindung in einer abgewandelten Ausführungsform und dem axialen Schnitt in einer Seitenansicht,
- Fig. 7 und 8: zwei abgewandelte Ausführungsformen des Gefäßes einer Küchenmaschine gemäß der Erfindung, mit entsprechend abgewandelten tellerförmigen Einsätzen, jeweils im axialen Schnitt in einer Seitenansicht, und
- Figur 9: eine schematische Veranschaulichung des Gebrauches der Küchenmaschine nach Fig. 1 unter schematischer Darstellung verschiedener Stufen des Zusammenbaus der Teile bei der Benutzung, jeweils in perspektivischer Darstellung.

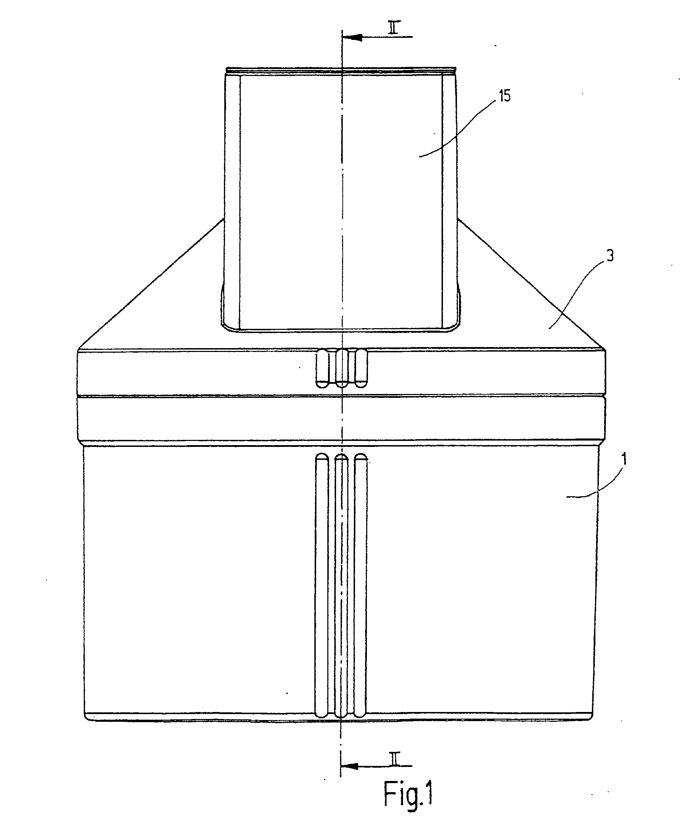

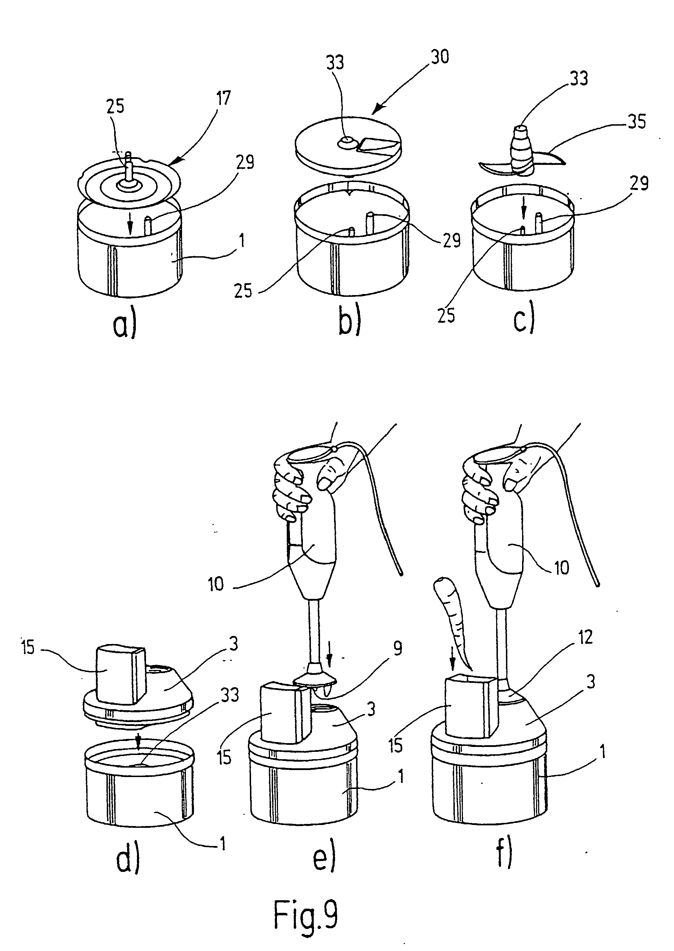

Das in den Fig. 1, 2, 3 dargestellte Küchengerät, das auch als Küchenmaschine bezeichnet werden kann, dient zum Zubereiten von Lebensmitteln, beispielsweise zum Zerkleinern, Schneiden, Raffeln und dergleichen. Es weist ein im Wesentlichen zylindrisches Gefäß 1 auf, das aus Kunststoff besteht, Standfüße 2 trägt und durch einen Deckel 3 verschlossen ist. In dem haubenförmigen Deckel 3 ist ein Stirnradgetriebe 4 untergebracht, das auf einem topfförmigen Trägerteil 5 angeordnet ist, welches in den Deckel 3 eingepasst ist und bei 6 in das Gefäß 1 ragt. Die Eingangswelle des Getriebes 4 ist mit 7 bezeichnet und trägt an ihrem freien Ende eine Wellenkupplung 8, die zur Kupplung mit der Antriebswelle 9 eines aus Figur 9 zu ersehenden Stabrührgeräts 10 eingerichtet ist. Das Stabrührgerät 10 kann in der aus den Bildern e, f der Fig. 9 ersichtlichen Weise auf den Deckel 3 aufgesetzt werden, der zu diesem Zwecke eine zu der Eingangwelle 7 koaxiale Aufnahme 11 für die die Antriebswelle 9 des Stabrührgerätes 10 umgebende Schutzhaube 12 aufweist.

Die zu der Eingangswelle 7 achsparallele Ausgangswelle 13 des Getriebes 4 ist bei auf das Gefäß aufgesetzte Deckel 3 koaxial zu dem Gefäß 1. Sie trägt ein in das Gefäß ragendes Kupplungselement 14 für ein in dem Gefäß 1 umlaufendes Werkzeug, das im Einzelnen noch beschrieben werden wird.

Im seitlichen Abstand von der Ausgangswelle 13 ist in dem Deckel 3 ein Einfüllschacht 15 für zuzubereitende Lebensmittel vorgesehen, der in das Gefäß 1 führt und einen Druckstößel 16 für das Lebensmittel enthält.

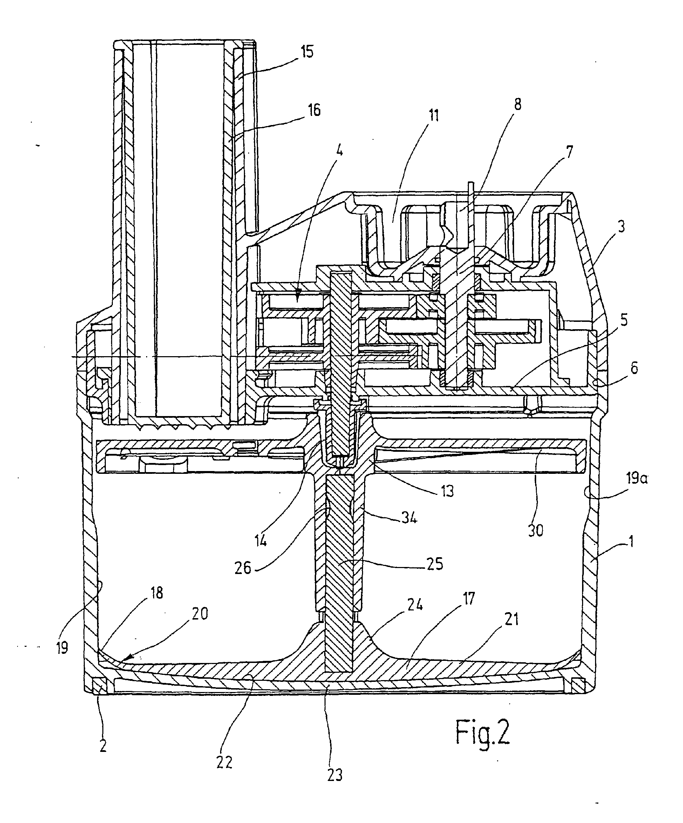

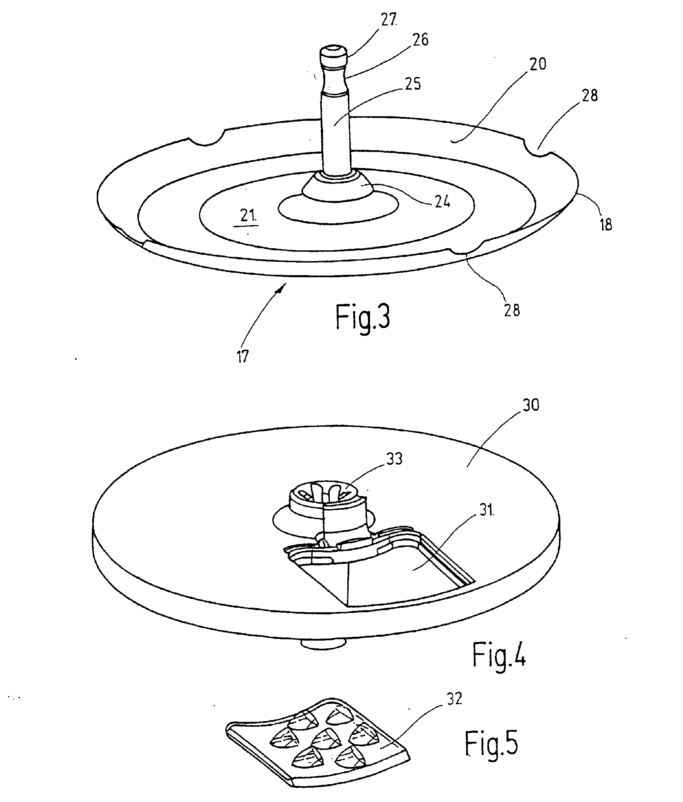

In das Gefäß 1 ist ein tellerförmiger Einsatz 17 eingesetzt, der in der aus den Fig. 2, 3 ersichtlichen Weise im Wesentlichen zylindrisch ausgebildet ist und der mit seinem Rand bei 18 an die Innenwand 19 des Gefäßes 1 heranreicht und an dieser anliegt. Der Rand 18 des tellerförmigen Einsatzes 17 ist zu der Wand des Gefäßes 1 hinweisend hochgebogen, wobei der an den Rand 18 anschließende Randbereich 20 des Einsatzes 17 zu dem Rand 18 hin keilförmig sich verjüngend ausgebildet ist. Durch entsprechende Bemessung und Materialwahl kann erreicht werden, dass der Randbereich 20 als Dichtlippe wirkt, so dass der Rand 18 unter einer gewissen radialen Vorspannung an der Innenwand 19 des Gefäßes 1 anliegt und den Einsatz 17 randseitig gegen die Innenwand 19 abdichtet. Der tellerförmige Einsatz 17 ist auf seiner an dem Randbereich 20 anschließenden Innenfläche 21 gewölbt oder im Wesentlichen eben, während er auf seiner Außenfläche 22 an die leicht konkave Gestalt der Bodenwand 23 des Gefäßes 1 angepasst ist, so dass der Einsatz 17 bis zu dem hochgebogenen Randbereich 20 hin an der Bodenwand 23 innen anliegt.

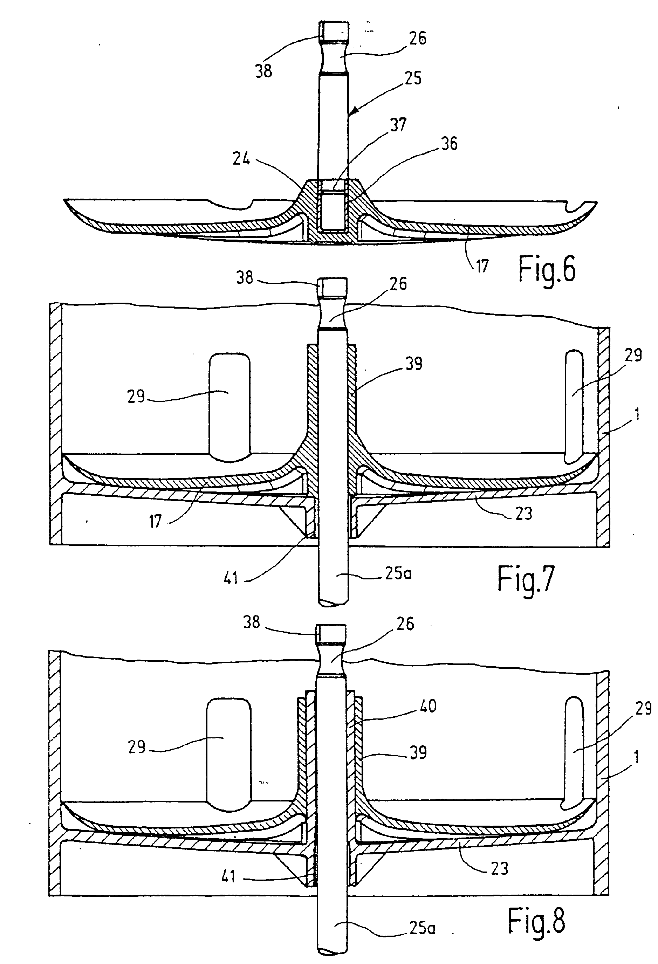

Der aus Kunststoff bestehende tellerförmige Einsatz 17 ist mit einer angeformten, seine Mittelachse enthaltenden Nabe 24 ausgebildet, in die eine zylindrische, aus Stahl bestehende Achse 25 koaxial eingesetzt ist. Die Achse 25 ist in Bereich ihres freien Endes mit einer flachen, im Profil im Wesentlichen teilkreisförmigen Ringnut 26 ausgebildet, an die sich ein abgerundeter Endabschnitt 27 anschließt, der so gestaltet ist, dass er das Aufsetzen eines Werkzeugs auf die Achse 25 erleichtert. An seinem Umfang trägt der in das Gefäß 2 herausnehmbar eingesetzte tellerförmige Einsatz 17 bei dem dargestellten Ausführungsbeispiel 4 Ausnehmungen 28, die mit an Innenwand 19 des Gefäßes 1 haben ausgebildeten Rippen 29 (Fig.7,8) formschlüssig zusammenwirken und eine Verdrehsicherung für den Einsatz 17 in dem Gefäß 1 bilden. Durch seine Gestalt und den an die Innenwand 19 des Gefäßes heranreichenden Rand 18 ist der tellerförmige Einsatz 17 in dem Gefäß 1 einwandfrei zentriert. Auf die Achse 25 des tellerförmigen Einsatzes 17 ist ein Werkzeug aufgesetzt, das bei dem in den Figuren 1, 2 dargestellten Ausführungsbeispiel eine Raffelscheibe 30 ist, deren hier interessierende Einzelheiten aus den Figuren 4, 5 zu entnehmen sind. Die zylindrische Raffelscheibe 30 weist an einer Stelle im radialen Abstand von Ihrer Achse eine durchgehende Öffnung 34 auf, in den Raffeleinsatz 32 einsetzbar ist. Sie ist auf ihrer Oberseite mit einem koaxialen Kupplungsteil 33 ausgebildet, das zusammen mit dem Kupplungselement 14 des Getriebes 4 eine formschlüssige Steckkupplung bildet. Auf ihrer Unterseite trägt die Raffelscheibe 30 eine koaxiale Lagerhülse 34 mit der sie auf der Achse 25 des tellerförmigen Einsatzes 17 drehbar gelagert und geführt ist. Die Handhabung des tellerförmigen Einsatzes 17 und die Bedienung des beschriebenen Gerätes ist insbesondere aus Fig. 9 zu verstehen:

Zur Vorbereitung der Zubereitung eines Lebensmittels wird mit abgenommenem Deckel 3 in das offene Gefäß der tellerförmige Einsatz 17 eingesetzt (Bild a). Auf die damit in das Gefäß 1 eingebrachte vertikale Achse 25 des tellerförmigen Einsatzes 17 wird das Werkzeug in Gestalt der Raffelscheibe 30 mit der Lagerhülse 34 aufgesteckt (Bild b). Anschließend wird der Deckel 3 auf das Gefäß 1 aufgesetzt, dessen Getriebeausgangswelle 13 über das Kupplungselement 14 dabei mit dem Kupplungsteil 33 der Raffelscheibe 30 drehfest gekuppelt ist (Bild d). Nunmehr kann das Handrührgerät 10 auf den Deckel 3 aufgesetzt werden (Bilder e, f) wobei die Antriebswelle 9 über die Kupplung 8 mit der Getriebeeingangswelle 7 gekuppelt wird, womit das Gerät betriebsbereit ist.

Bild c zeigt eine alternative Ausbildungsform des Werkzeugs in Gestalt eines sogenannten Cutters 35 zum Zerkleinern von Lebensmitteln, dessen Kupplungsteil wieder mit 33 bezeichnet ist und der wiederum auf die Achse 25 des tellerförmigen Einsatzes 17 aufgesteckt wird.

Zur Entnahme der über den Schacht 15 eingeführten mittels der Raffelscheibe 30 bearbeiteten Lebensmittel aus dem Gefäß 1 wird nach Abnahme des Deckels 3 und der Raffelscheibe 30 der tellerförmige Einsatz 17 an seiner Achse 25 einfach aus dem Gefäß 1 herausgezogen, wobei das Raffelgut auf dem Einsatz 17 aufgehäuft ist und auf diesem durch den hochgewölbten Rand 18 zurückgehalten wird. Beim Rausziehen des Einsatzes 17 aus dem Gefäß 1 streift der Rand 18 an der Innenwand 19 des Gefäßes 1 entlang, so dass keine Teile des Raffelguts nach unten fallen können. In dem Bereich 19a anschließend an die Gefäßöffnung ist die Innenwand 19 mit einem etwas größeren Durchmesser ausgebildet, um die Entnahme und vor allem auch das Wiedereinsetzen des tellerförmigen Einsatzes 17 aus bzw. in das Gefäß 1 zu erleichtern. Das leere Gefäß 1 kann leicht gereinigt werden, weil die Achse 25 mit dem tellerförmigen Einsatz 17 herausgenommen ist. Auch die Reinigung des tellerförmigen Einsatzes 17 bereitet keine Probleme.

Fig. 6 zeigt eine abgewandelte Ausführungsform des tellerförmigen Einsatzes 17 bei der die Achse 25 mittels einer Lagerbuchse 36 in der Nabe 24 drehbar gelagert ist. Sie wird zusammen mit der Lagerbuchse 36 und dem auf dem tellerförmigen Einsatz 17 liegenden bearbeiteten Lebensmittelgut aus dem Gefäß 1 herausgehoben. Ein bei 37 angedeuteter Sicherungsring verhindert, dass sich die Achse 25 dabei von dem Einsatz 17 löst. Das Werkzeug kann in diesem Fall drehfest auf die eine Welle bildende Achse 25 aufgesetzt und mit dieser über einen bei 38 angedeuteten Längskeil verbunden sein. Bei dieser Ausführungsform ist die Achse 25 drehfest mit der Getriebeausgangswelle 13 (Fig. 2) gekuppelt.

Schließlich kann der erfindungsgemäße Gedanke auch für Küchenmaschinen oder Geräte verwendet werden, bei denen die Antriebswelle 25a den Boden 23 des Gefäßes 1 durchdringend angeordnet ist, wie dies in den Figuren 7, 8 veranschaulicht ist. Die Antriebswelle 25a ist dabei mit einer in diesen Figuren nicht weiter dargestellten Antriebsquelle gekuppelt, die entweder unterhalb des Gefäßes 1 angeordnet oder von oben her lösbar mit der Antriebswelle 25a verbunden ist. Bei der Ausführungsform nach Fig. 7 ist der tellerförmige Einsatz 17 mit einer angeformten koaxialen Hülse 39 ausgebildet, die die Antriebswelle 25a umschließt und die das Herausnehmen des Einsatzes 17 aus dem Gefäß 1 erleichtert.

Bei der Ausführungsform nach Fig. 8 ist die Antriebswelle durch eine an dem Gefäßboden 23 angeformte, in das Gefäßinnere ragende zylindrische Lagerhülse 40 geführt. In diesem Fall ist die an dem tellerförmigen Einsatz 17 angeformte koaxiale Hülse 39 mit einem Durchmesser ausgebildet, der es ermöglicht die Hülse 39 auf die Lagerhülse 40 aufzuschieben. Ebenso wie bei der Ausführungsform nach Fig. 7 ist die Antriebswelle 25a selbst gegen den Behälterboden 23 bei 41 abgedichtet und ggfs. gelagert.

Bei den Ausführungsformen nach Fig. 7, 8 bleibt zwar nach Entnahme des tellerförmigen Einsatzes 17 aus dem Gefäß 1 die Antriebswelle 25a in dem Gefäß 1 zurück, doch bietet der tellerförmige Einsatz 17 auch bei diesen Küchenmaschinentypen den Vorteil einer erleichterten Entnahme des bearbeiteten Lebensmittelgutes aus dem Gefäß 1.

Bei einer Küchenmaschine oder einem Küchengerät zum Zubereiten von Lebensmitteln ist in dem die zubereiteten Lebensmittel aufnehmenden Gefäß ein tellerförmiger Einsatz herausnehmbar angeordnet, der randseitig an die Gefäßinnenwand heranreicht und der die Antriebsachse oder -welle für das Werkzeug eng umschließt. Die Antriebsachse oder -welle des Werkzeugs ist mit dem tellerförmigen Einsatz ggfs. unverlierbar verbunden.

## Patentansprüche

1. Küchenmaschine zum Zubereiten von Lebensmitteln mit einem zum Aufnehmen der Lebensmittel bestimmtem Gefäß (1), einem in dem Gefäß umlaufenden angetriebenen Werkzeug (30), einer das Werkzeug in Umdrehung versetzenden Antriebsquelle (10), die mit dem Werkzeug kuppelbar ist, wobei das Werkzeug mittels einer in dem Gefäß angeordneten Achse oder Welle (25, 25a) geführt oder gelagert ist und mit einem in das Gefäß (12) herausnehmbar eingesetzten, im Wesentlichen zylindrischen Einsatz, der eine Innenfläche (21) und eine Außenfläche (22) aufweist und auf seiner Innenfläche eine angeformte Nabe oder Hülse (39) trägt, wobei der Einsatz (17) zur Aufnahme der zubereiteten Lebensmittel tellerförmig mit einem hochgebogenen Randbereich (20) ausgebildet ist und mit seinem Rand im Wesentlichen an die Innenwand des Gefäßes (1) heranreicht und das Werkzeug von dem Einsatz abnehmbar ist.

2. Küchenmaschine nach Anspruch 1, **dadurch gekennzeichnet, dass** die Achse (25) mit dem tellerförmigen Einsatz (17) starr verbunden ist und das Werkzeug auf der Achse drehbar gelagert ist.

3. Küchenmaschine nach Anspruch 2, **dadurch gekennzeichnet, dass** das Werkzeug (30) eine Kupplungseinrichtung (33) für die Antriebsquelle aufweist.

4. Küchenmaschine nach Anspruch 1, **dadurch gekennzeichnet, dass** die Welle (25a) des Werkzeugs den Boden des Gefäßes durchdringend angeordnet ist.

5. Küchenmaschine nach Anspruch 4, **dadurch gekennzeichnet, dass** der tellerförmige Einsatz (17) eine Hülse (39) trägt, durch die die Antriebswelle (25a) verläuft.

6. Küchenmaschine nach Anspruch 1, **dadurch gekennzeichnet, dass** die das Werkzeug tragende Welle (25) an dem tellerförmigen Einsatz (17) drehbar gelagert ist.

7. Küchenmaschine nach Anspruch 1, **dadurch gekennzeichnet, dass** der tellerförmige Einsatz (17) napfförmig gewölbt ist.

8. Küchenmaschine nach Anspruch 1, **dadurch gekennzeichnet, dass** der tellerförmige Einsatz (17) zumindest bereichsweise im Wesentlichen eben ist.

9. Küchenmaschine nach Anspruch 1, **dadurch gekennzeichnet, dass** das Gefäß (1) und/oder der tellerförmige Einsatz (17) Mittel zur Verdrehsicherung des Einsatzes in dem Gefäß aufweist.

10. Küchenmaschine nach Anspruch 1, **dadurch gekennzeichnet, dass** die Antriebsquelle ein Stabrührgerät (10) ist, das auf das Gefäß aufsetzbar ist.

11. Küchenmaschine nach Anspruch 10, **dadurch gekennzeichnet, dass** das Stabrührgerät (10) auf einen das Gefäß zumindest teilweise abschließbaren Deckel (3) aufsetzbar ist und dass der Deckel ein eingangsseitig von dem Stabrührgerät angetriebenes Getriebe enthält, das ausgangsseitig mit dem Werkzeug kuppelbar ist.

12. Küchenmaschine nach Anspruch 1, **dadurch gekennzeichnet, dass** der tellerförmige Einsatz (17) gegen die Innenwand (19) des Gefäßes abgedichtet ist.

13. Küchenmaschine nach Anspruch 1, **dadurch gekennzeichnet, dass** der tellerförmige Einsatz (17) mit dem Werkzeug umlaufend ausgebildet ist.

14. Einsatz zur Verwendung bei einer Küchenmaschine nach einem der vorhergehenden Ansprüche, der eine im Wesentlichen zylindrische, tellerförmige Gestalt mit einer Innenfläche (21), einer Außenfläche (22) und einem hochgebogenen Randbereich (20) zur Aufnahme von zubereiteten Lebensmitteln aufweist und auf seiner Innenfläche eine angeformte Nabe oder Hülse (39) trägt.

15. Einsatz nach Anspruch 1, **dadurch gekennzeichnet, dass** er aus Kunststoff besteht.

16. Einsatz nach Anspruch 14 oder 15, **dadurch gekennzeichnet, dass** er auf seiner an dem Randbereich (20) anschließenden Innenfläche (21) gewölbt ist.

17. Einsatz nach Anspruch 14 oder 15, **dadurch gekennzeichnet, dass** er auf seiner an den Randbereich (20) anschließenden Innenfläche (21) im Wesentlichen eben ist.

18. Einsatz nach einem der Ansprüche 14 bis 17, **dadurch gekennzeichnet, dass** er auf seiner Außenfläche (22) an die konkave Gestalt der Bodenwand (23) eines ihn aufnehmenden Gefäßes (1) angepasst gestaltet ist.

19. Einsatz nach einem der Ansprüche 14 bis 18, **dadurch gekennzeichnet, dass** der Randbereich (20) zu dem Rand (18) hin keilförmig sich verjüngend ausgebildet ist.

20. Einsatz nach einem der Ansprüche 14 bis 20, **dadurch gekennzeichnet, dass** er an seinem Umfang Ausnehmungen (28) aufweist.

## Claims

1. A kitchen appliance for preparing food, having a receptacle (1) intended for receiving the food, a driven tool (30) rotating inside the receptacle, a motive source (10) causing the tool to rotate which can be connected to the tool, wherein the tool is guided, or seated, by means of or on an arbor or a spindle (25, 25a) arranged inside the receptacle, and a substantially cylindrical insert removably placed into the receptacle (1), the insert having an inner surface (21) and an outer surface (22) and supporting at its inner surface a hub or sleeve (39) formed on it, wherein the insert (17) is plate-shaped having a high-arched edge area (20) for receiving the prepared food, and the edge of the insert comes substantially close to the inner wall of the receptacle (1), and the tool is removable from the insert.

2. The kitchen appliance in accordance with claim 1, **characterized in that** the arbor (25) is rigidly connected with the plate-shaped insert (17), and the tool is rotatably seated on the arbor.

3. The kitchen appliance in accordance with claim 2, **characterized in that** the tool (30) has a coupling device (33) for the motive source.

4. The kitchen appliance in accordance with claim 1,
**characterized in that** the spindle (25a) of the tool is arranged so that it projects through the bottom of the receptacle.

5. The kitchen appliance in accordance with claim 4, **characterized in that** the plate-shaped insert (17) supports a sleeve (39), through which the driveshaft (25a) extends.

6. The kitchen appliance in accordance with claim 1, **characterized in that** the spindle (25) supporting the tool is rotatably seated on the plate-shaped insert (17).

7. The kitchen appliance in accordance with claim 1, **characterized in that** the plate-shaped insert (17) is arched in a cup-shape.

8. The kitchen appliance in accordance with claim 1, **characterized in that** the plate-shaped insert (17) is substantially flat, at least in some areas.

9. The kitchen appliance in accordance with claim 1, **characterized in that** the receptacle (1) and/or the plate-shaped insert (17) have means for fixing the insert in the receptacle in a manner fixed against relative rotation.

10. The kitchen appliance in accordance with claim 1, **characterized in that** the motive source is a hand-held blender (10) which can be placed on the receptacle.

11. The kitchen appliance in accordance with claim 10,
**characterized in that** the hand-held blender (10) can be placed on a lid (3), which closes the receptacle off at least partially, and that the lid contains a gear, whose input side is driven by the hand-held blender and whose output side can be coupled with the tool.

12. The kitchen appliance in accordance with claim 1, **characterized in that** the plate-shaped insert (17) is sealed against the inner wall (19) of the receptacle.

13. The kitchen appliance in accordance with claim 1, **characterized in that** the plate-shaped insert (17) is designed to revolve with the tool.

14. Insert for use with a kitchen appliance in accordance with one of the preceding claims, the insert having a substantially cylindrical plate-shaped shape having an inner surface (21), an outer surface (22) and a high-arched edge area (20) for receiving prepared food, and supporting at its inner surface a hub or sleeve (39) formed on it.

15. Insert in accordance with claim 1, **characterized in that** it is made of plastic.

16. Insert in accordance with one of the claims 14 or 15, **characterized in that** the insert is arched at its inner surface (21) adjoining the edge area (20).

17. Insert in accordance with one of the claims 14 or 15, **characterized in that** the insert is substantially flat at the inner surface (21) adjoining the edge area (20).

18. Insert in accordance with one of the claims 14 to 17, **characterized in that** the insert is matched at its outer surface (22) to the concave shape of the bottom (23) of a receptacle (1) the insert is received in.

19. Insert in accordance with one of the claims 14 to 18, **characterized in that** the edge area (20) is embodied to taper in a wedge shaped toward the edge (18).

20. Insert in accordance with one of the claims 14 to 19, **characterized in that** the insert has cutouts (28) on its circumference.

## Revendications

1. Appareil ménager pour préparer des aliments, comportant un récipient (1) destiné à recevoir les aliments, un outil (30) entraîné, tournant dans le récipient, une source motrice (10) qui amène l'outil en rotation et peut être couplée à l'outil, l'outil étant guidé ou supporté au moyen d'un axe ou arbre (25, 25a) agencé dans le récipient, et un insert sensiblement cylindrique qui est introduit de manière amovible dans le récipient (12), présente une surface interne (21) et une surface externe (22) et porte sur sa surface interne un moyeu ou douille adapté (39), l'insert (17) étant, pour recevoir les aliments préparés, réalisé sous la forme d'une assiette présentant une zone de bord (20) recourbée vers le haut et parvenant avec son bord sensiblement sur la paroi interne du récipient (1), l'outil pouvant être détaché de l'insert.

2. Appareil ménager suivant la revendication 1, **caractérisé en ce que** l'axe (25) est relié de manière rigide à l'insert en forme d'assiette (17) et **en ce que** l'outil est supporté sur l'axe de manière à pouvoir tourner.

3. Appareil ménager suivant la revendication 2, **caractérisé en ce que** l'outil (30) présente une dispositif de couplage (33) pour la source motrice.

4. Appareil ménager suivant la revendication 1, **caractérisé en ce que** l'arbre (25a) de l'outil est agencé de manière à passer à travers le fond du récipient.

5. Appareil ménager suivant la revendication 4, **caractérisé en ce que** l'insert en forme d'assiette (17) porte une douille (39) à travers laquelle passe l'arbre d'entraînement (25a).

6. Appareil ménager suivant la revendication 1, **caractérisé en ce que** l'arbre (25) portant l'outil est supporté de manière à pouvoir tourner sur l'insert (17) en forme d'assiette.

7. Appareil ménager suivant la revendication 1, **caractérisé en ce que** l'insert (17) en forme d'assiette est galbé en forme de cuvette.

8. Appareil ménager suivant la revendication 1, **caractérisé en ce que** l'insert (17) en forme d'assiette est sensiblement plan au moins de manière zonale.

9. Appareil ménager suivant la revendication 1, **caractérisé en ce que** le récipient (1) et/ou l'insert (17) en forme d'assiette présente des moyens pour assurer l'insert contre toute rotation dans le récipient.

10. Appareil ménager suivant la revendication 1, **caractérisé en ce que** la source motrice est un mixeur à tige (10) qui peut être monté sur le récipient.

11. Appareil ménager suivant la revendication 10, **caractérisé en ce que** le mixeur à tige (10) peut être monté sur un couvercle (3) capable de fermer au moins partiellement le récipient et **en ce que** le couvercle contient une transmission qui est entraînée du côté entrée par le mixeur à tige et qui peut être couplée du côté sortie avec l'outil.

12. Appareil ménager suivant la revendication 1, **caractérisé en ce que** l'insert (17) en forme d'assiette est rendu étanche contre la paroi interne (19) du récipient.

13. Appareil ménager suivant la revendication 1, **caractérisé en ce que** l'insert (17) en forme d'assiette est réalisé de manière à tourner avec l'outil.

14. Insert à utiliser dans un appareil ménager suivant l'une des revendications précédentes, qui présente, pour recevoir des aliments préparés, une configuration en forme d'assiette, essentiellement cylindrique, présentant une surface interne (21), une surface externe (22) et une zone de bord (20) recourbée vers le haut et porte sur sa surface interne un moyeu ou douille (39) adapté.

15. Insert suivant la revendication 1, **caractérisé en ce qu'**il est constitué de matière synthétique.

16. Insert suivant la revendication 14 ou 15, **caractérisé en ce qu'**il est galbé sur sa surface interne (21) rattachée à la zone de bord (20).

17. Insert suivant la revendication 14 ou 15, **caractérisé en ce qu'**il est sensiblement plan sur sa surface interne (21) rattachée à la zone de bord (20).

18. Insert suivant l'une des revendications 14 à 17, **caractérisé en ce que**, sur sa surface externe (22), il est conformé de manière adaptée à la configuration concave de la paroi de fond (23) d'un récipient (1) qui le reçoit.

19. Insert suivant l'une des revendications 14 à 18, **caractérisé en ce que** la zone de bord (20) est réalisée de manière à s'amincir en forme de coin en direction du bord (18).

20. Insert suivant l'une des revendications 14 à 19, **caractérisé en ce qu'**il présente des évidements (28) sur son pourtour.
